## Europäisches Patentamt
## European Patent Office
## Office européen des brevets

(11) Publication number: **0 234 785**
**A1**

# (12) EUROPEAN PATENT APPLICATION

(21) Application number: **87301083.9**

(22) Date of filing: **06.02.87**

(51) Int. Cl.³: **G 06 F 15/06**

(30) Priority: 06.02.86 GB 8603013
15.03.86 GB 8606452

(43) Date of publication of application:
02.09.87 Bulletin 87/36

(84) Designated Contracting States:
AT BE CH DE ES FR GB IT LI NL SE

(71) Applicant: The British Petroleum Company p.l.c.
Britannic House Moor Lane
London EC2Y 9BU(GB)

(72) Inventor: Harrison, John Norman
The British Petroleum Co., p.l.c., Chertsey Road
Sunbury-on-Thames Middlesex, TW16 7LN(GB)

(72) Inventor: Morris, Derek Owen
90 Acorn Avenue
Cowfold, West Sussex, RH 13 8RC.(GB)

(72) Inventor: Mottershead, Christopher John,
The British Petroleum Co., p.l.c., Chertsey Road
Sunbury-on-Thames Middlesex, TW16 7LN,(GB)

(74) Representative: Ryan, Edward Terrence et al,
BP INTERNATIONAL LIMITED, Patents Division Chertsey
Road
Sunbury-on-Thames Middlesex, TW16 7LN(GB)

(54) Improvements relating to control flow in computers.

(57) A computer has a computation processor and an instruction memory where instructions relating to computation are stored, and also a control flow processor and a control flow memory where instructions relating to the control flow of the program are stored. The computation instructions processed by the computation processor are determined in accordance with control flow instructions processed in the control flow processor. The invention is particularly applicable to SIMD computers.

FIG.2

IMPROVEMENTS RELATING TO CONTROL FLOW

IN COMPUTERS

The present invention relates to an improved method of providing control flow in the execution of a computer program.

The present invention is not restricted to the execution of programs for computers comprising a plurality of individual processing elements operating in SIMD or lock-step mode. However it is particularly advantageous when used in the execution of programs by such computers.

For a discussion of SIMD computer systems reference should be made to Stone et al, "Introduction to Computer Architecture", SRA Research Associates Inc., 1975, at pages 327 to 354.

When a computer is executing a program it will execute a sequence of instructions fetched from a store or memory of some kind. These instructions either perform computation on data in the store or memory or alter the control flow within the program, possibly on a data-dependent basis. In some cases the instructions will be executed in a predetermined sequence from beginning to end of a program. Generally however it will be necessary to arrange for different sequences of instructions to be executed depending on the results of executing other instructions in the program. Thus it will generally be desirable to provide for loops in which sequences of instructions are executed until a given condition is satisfied, or for a branch to one of two or more succeeding sequences of instructions to be executed depending on the outcome of some test condition.

Changes in the control flow in a program are conventionally

1

carried out by including instructions relating to the control flow in the stream of instructions relating to computation fed to a processor within the computer.

Even when one processor in a multiprocessor computer deals specifically with the control flow while other processors carry out computation only, as is discussed in more detail below, a common stream of computation instructions and control flow instructions is used.

As mentioned above, the present invention is particularly useful when applied to multiprocessor computers.

Some multiprocessor computer systems have been designed to operate in a mode known in the art as SIMD, or lock-step as indicated above.

In a computer system operating in the SIMD mode, an instruction is not provided to a processing element until every processing element is ready for the instruction.

This ensures every processing element in the system will be executing the same instruction at the same time. Different data is available to each processing element thus providing a means to provide many sets of results simultaneously.

A problem with this type of system is how to provide the control flow required by computer programs, such as loops, branches and jumps.

A multiprocessor architecture is disclosed by Requa and McGraw, "The Piecewise Data Flow Architecture: Architectural Concepts", IEEE Transactions on Computers, May 1983. In the Piecewise Data Flow (PDF) architecture, a PDF Block Processor is responsible for instruction stream control and fetches all instructions from a Scalar Memory. The instructions are fetched from memory in the form of a block of instructions containing both control flow instructions and computation instructions. The PDF Block Processor removes instructions relating to control flow before passing the remaining instructions to an Instruction Issue Unit which further passes them to Instruction Processors. This design is also complicated by the fact that the PDF Block Processor may transform computation instructions before passing them on to the Instruction Issue Unit. The type of program that can be executed efficiently on such a computer is restricted.

According to the present invention there is provided a computer having
(a) a computation processor,
(b) an instruction memory, where instructions relating to computation are stored,
(c) a control flow processor,
(d) a control flow memory, where instructions relating to the control flow of the program are stored, and
(e) means whereby the selection of computation instructions processed by the computation processor is determined in accordance with control flow instructions processed by the control flow processor.

According to another aspect of the present invention there is provided a method of operating a computer to carry out a computation in which changes in the control flow take place during the computation which computer comprises a first processor, a second processor, a first memory, and a second memory, said method comprising the steps of (1) carrying out computation in the first processor in accordance with a sequence of instructions stored in the first memory, and (2) performing control flow by executing instructions in said second processor fetched from said second memory.

It should be noted that the instruction and control flow memories are memories holding separate sequences of instructions for the computation processor and the control flow processor respectively. These are to be distinguished from registers within processors which temporarily hold control flow instructions stripped out from a block of instructions containing both control flow and computation instructions. Such a use of registers as disclosed for example in the paper by Requa and McGraw mentioned above.

The term "processor" is used by persons skilled in the design and construction of computers to refer to the total structure used to carry out a specific processing operation. It is also used to refer to a unit which carries out a specific processing step within the total structure. Thus for example an "array processor" is a structure which carries out the processing of arrays of data. The array processor may be made up of a plurality of individual processing elements. Each processing element may comprise memory and a "processor" which has a single arithmetic and logic unit (ALU). Skilled persons will however readily understand from the context the sense in which "processor" is used on any given occasion.

The computation processor may carry out computation on binary numbers so as to give answers to numerical problems. It may also carry out computations on binary numbers representing codes for alphabetic characters as part of text manipulation.

Although it is possible to arrange for the control flow processor to also execute input and output instructions, the control flow processor preferably fetches and executes only control flow instructions.

In a computer according to the present invention the instructions relating to computation (after being dispatched from an instruction memory)are executed by a computation processor. The control flow processor fetches its instructions from a separate control flow memory.

The control flow processor is responsible for determining the sequence in which computation instructions are dispatched to the computation processor.

It is possible to carry out program control flow using instructions contained in the control flow memory without reference to any results produced by the computation processor. In general however it will be desirable to provide for the control flow to be modified as a result of computation carried out by the computation processor. It is therefore strongly preferred to provide means for communicating a datum value from the computation processor to the control flow processor and to change the sequence of instructions fetched from the control flow memory by the control flow processor in accordance with the value of said datum.

In one implementation, such a datum is restricted to having one of two values and is conveyed by means of the logic level on a single wire (from the computation processor to the control flow processor).

In this implementation the datum value passed to the control flow processor indicates whether data values resulting from computation meet a test condition. The datum value passed to the control flow processor determines subsequent program control flow.

A further aspect of the invention involves grouping sequences of computation instructions in the instruction memory into blocks. An instruction moving means is provided whereby such a block of instructions is dispatched to the computation processor in a sequential manner. Thus control flow within a block of instructions is purely sequential without the possibility of any form of branching. The control flow processor selects the sequence in which blocks are dispatched, by the instruction moving means, to the computation processor.

The control flow processor identifies a block to the instruction moving means by means of a block start address and a block end address. In an alternative implementation, a block is identified by means of a block start address and a block length. The use of an instruction moving means to provide sequential control flow within a block results in a simplified control flow program and less processing for the control flow processor.

The block may be identified to the instruction moving means by passing the addresses and the start address and block length or end address directly to the instruction moving means. Alternatively the block start address and block length or end address may be stored in memory and a pointer to the relevant area in memory passed to the instruction moving means.

A further enhancement of this aspect of the present invention involves the control flow processor identifying a plurality of blocks to the instruction moving means. The instruction moving means selects one of these blocks to dispatch to the computation processor, this selection being in accordance with a datum value communicated from the computation processor to both the control flow processor and the instruction moving means. As the control flow processor also receives the communicated datum value, it is aware of which block is selected by the instruction moving means. In most implementations, such an enhancement allows the selection of a block to be carried out in a shorter time and thus the delay between dispatching blocks is reduced. A preferred feature of this enhancement is that the number of blocks which the instruction moving means selects from is limited to two.

The present invention may be used with a computation processor containing only a single element for carrying out computations. However it is particularly suitable for use in multiprocessor computers having a plurality of processing elements for carrying out computations.

Thus the present invention may be applied to a multiprocessor computer capable of operating in SIMD mode wherein the computation processor is comprised of a plurality of processing elements which receive instructions in a synchronised manner from a single instruction stream. Any SIMD computer requires a unit which is responsible for synchronising the dispatch of instructions to the processing elements. Such a unit may be termed a broadcasting means. Various methods of implementing a broadcasting means can be designed by those skilled in the art.

The instructions for the plurality of processing elements may be dispatched to the processing elements by an instruction moving means as discussed above.

The function of the control flow processor is to arrange for blocks of instructions to be broadcast to the processing elements which carry out computation. As explained above it is highly desirable for the processing elements to be able to pass a datum value back to the control flow processor so as to change the sequence of instructions executed by the control flow processor. A preferred way of doing this is to provide a common line to the control flow processor from all the processing elements which gives one datum value if the same defined datum value is generated by all of the processing elements and gives a different datum value if one or more of the processing elements do not generate the defined datum value.

Processing elements can thus influence the sequence of instructions they receive by altering this datum value before it is examined by the control flow processor.

As explained above the instruction moving means can be arranged such that the control flow processor can identify a plurality of blocks to the instruction moving means from which one is selected in accordance with a datum value communicated from the processing elements.

A multiprocessor computer according to the present invention may be operated as an attached processor to a host computer or as a computational server in a network of computers.

Embodiment

A specific embodiment of the present invention will now be described with reference to the drawings wherein

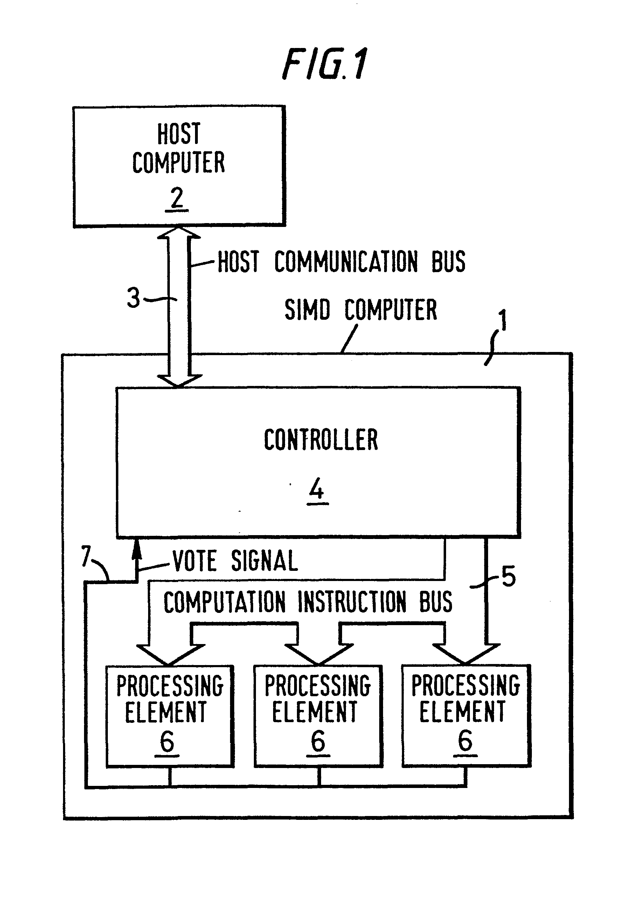

Figure 1 is a diagrammatic representation of a SIMD multiprocessor computer connected to a host computer,

Figure 2 is a diagrammatic representation of the controller in the SIMD computer, and

Figure 3 is a diagrammatic representation of the instruction moving means shown in Figure 2.

Computers generally work with groups (words) of binary digits (bits) of a given length. An instruction may take up several words so that the dispatch of a complete instruction may involve the successive dispatch of several words stored at individual addresses in memory. In the description references to the dispatch of an instruction are references to the dispatch of an individual word, which may contain a complete instruction or part of an instruction.

A SIMD computer 1 is connected to a host computer 2 by a host communication bus 3. The host computer provides the SIMD computer with programs and data and retrieves results by means of the host communication bus. The SIMD computer consists of a single controller 4 and a plurality of processing elements 6 (of which only three are shown in the interests of clarity).

The controller issues instructions to the processing elements by means of the computation instruction bus 5. The processing elements can influence the control flow by means of the vote signal 7.

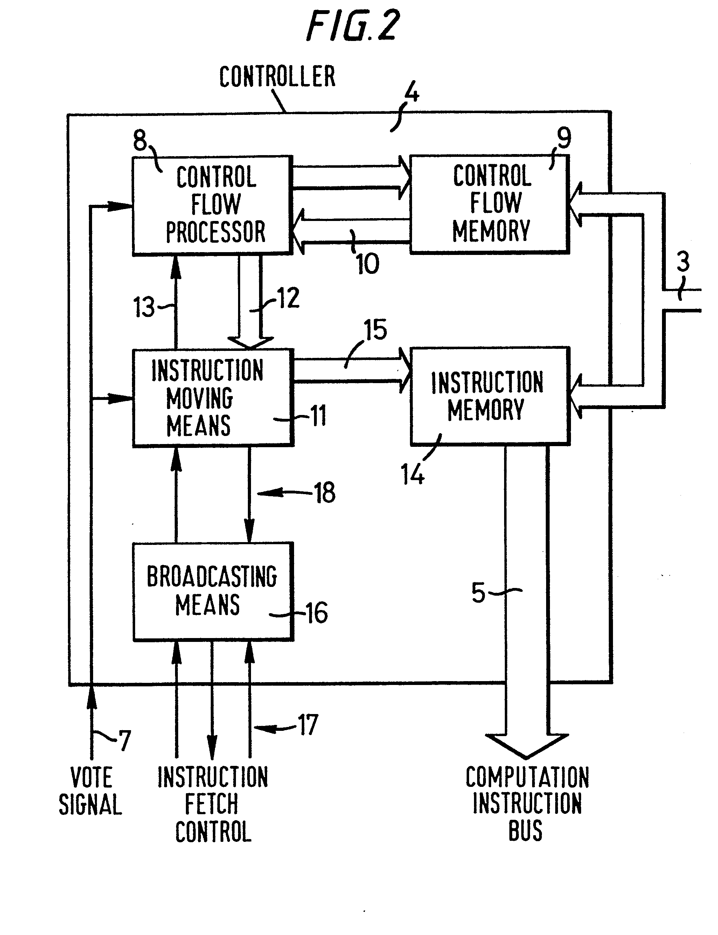

Figure 2 shows the components of the controller in more detail. The control flow processor 8 fetches instructions relating to control flow from the control flow memory 9 over bus 10. The control flow processor 8 selects blocks of computation instructions for execution by the processing elements, this selection being in accordance with the control flow instructions. Block identification information is sent from the control flow processor 8 to instruction moving means 11 over bus 12. Control signals passed back along line 13 allow the control flow processor 8 to monitor the operation of the instruction moving means 11. The instruction moving means 11 provides the instruction memory 14 with the address of an individual computation instruction by means of instruction memory address bus 15. The computation instruction is dispatched to the processing elements 6 over the computation instruction bus 5. The instruction moving means generates a sequence of computation instruction addresses thus causing an entire block of instructions to be dispatched to the processing elements in a sequential manner. Linked with moving means 11 is broadcasting means 16 which controls the time at which the instruction moving means changes to the next computation instruction address in a sequence. Control wires (shown generally at 17) between the controller and the processing elements can be used by the broadcast means to synchronise fetching of instructions by the processing elements in order to ensure that the next computation instruction is not dispatched until all the processing elements are ready to receive it. Signals can be passed between the instruction moving means 11 and broadcasting means 16 by control lines 18.

The operation of the controller is now described in more detail. The control flow memory 9 and instruction memory 14 are loaded with programs by the host computer over the host communication bus 3. The control flow processor 8 fetches a control flow instruction from the control flow memory 9. The control flow program in memory 9 is represented by a linked list of control flow instructions which the control flow processor follows by means of a control flow instruction pointer. A control flow instruction may identify a block of computation instructions to be executed by the processing elements. Such a block is identified by its address within the instruction memory 14 and its length.

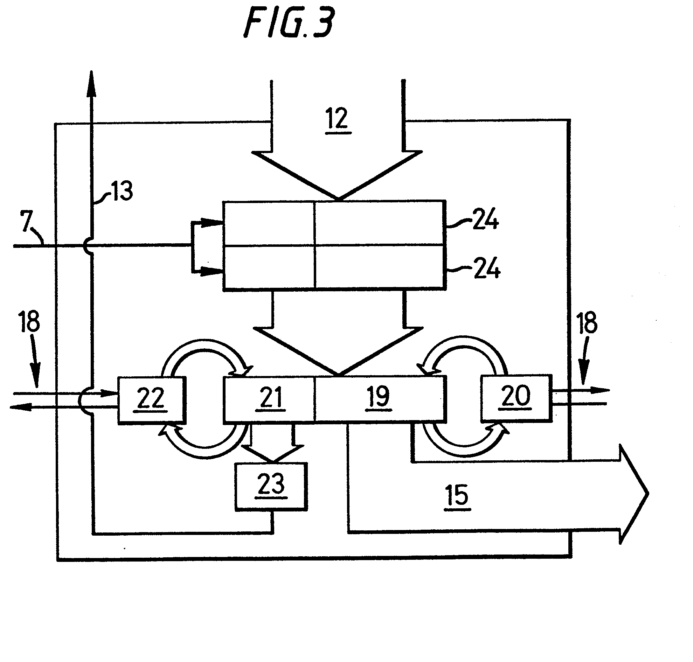

The control flow processor passes the block identification information to the instruction moving means 11 through bus 12. The internal arrangements of the instruction moving means 11 are shown in Figure 3. The instruction moving means addresses the instruction memory with the address of the first computation instruction in the block. This address is stored in an instruction memory register 19 and made available to the instruction memory over the address bus 15. When the broadcasting means determines that all the processing elements are ready to receive the next computation instruction, the instruction moving means 11 increments the address it is supplying to the instruction memory 14. This has the effect of selecting the next computation instruction in the block, as a block of instructions is stored in contiguous locations within the instruction memory 11. The address is incremented by an incrementing unit 20 changing the value stored in the instruction address register 19. The instruction moving means also decrements a remaining length register 21 containing the number of computation instructions yet to be dispatched. Remaining length register 21 is initially loaded with the length of the block. When the remaining length register contains a value of zero, the entire block has been dispatched and the instruction moving means signals the completion to the control flow processor as explained below. The value of the remaining length register 21 is decremented by a decrementing unit 22. This value is tested by the comparator 23 which signals to the control flow processor along line 13 when a value of zero is detected. The operation of the incrementing and decrementing units is controlled by signals from the broadcasting means along control lines 18.

Some control flow instructions do not refer to computation instructions and are therefore processed completely by the control flow processor. Subroutine call and return operations are processed in this manner, using a stack within the control flow processor.

A control flow instruction may have two possible successors, in which case one of the two must be selected. The control flow processor selects one of the two successors in accordance with the value of the vote signal 7 being communicated from the processing elements. Each processing element has a single bit voting register which it may set to a true or false value. The vote signal 7 is the logical AND of all these voting registers - in other words, the vote signal is false unless all the voting registers are true. By this means, data dependent control flow is achieved.

In the preferred embodiment, the delay between one block and the next is minimised by using a pipeline or look-ahead technique. Whilst the instruction moving means is busy dispatching one block, the control flow processor decodes the next control flow instruction and sends the block identification information to a buffer in the instruction moving means. The instruction moving means has a pair of such buffers 24 so that when a control flow instruction has two possible successors, the control flow processor can fetch them both and send the block identification information from both to the instruction moving means. In this case, the instruction moving means selects one of the buffers (when it has finished dispatching the current block) in accordance with the value of the vote signal. The control flow processor also tests the vote signal at this point in order to determine which control flow instruction to follow.

The control flow processor may be a standard microprocessor. However it is believed that the use of a specially designed processor will give substantial increases in speed compared with the use of a standard microprocessor. The instruction moving means 11 is comprised of a Direct Memory Access (DMA) device together with block address and length registers. The broadcasting means 16 can be considered as a small finite state machine and is implemented in a programmable logic device. The control flow and instruction memories are constructed from conventional memory components. The vote signal and the instruction fetch control signals from the processing elements are wired-AND lines driven by devices with open collector outputs.

The way in which a computer of the type described in the present invention may be used to execute a single program in a high level language containing both computation instructions and control flow instructions is described in our copending application           (Case 6332).

A method of synchronising processing elements suitable for use in the computer of the present invention is disclosed in our copending application           (Case 6531).

Claims

1. A computer having

(a) a computation processor,

(b) an instruction memory, where instructions relating to computation are stored,

(c) a control flow processor,

(d) a control flow memory, where instructions relating to the control flow of the program are stored,

(e) means whereby the selection of computation instructions processed by the computation processor is determined in accordance with control flow instructions processed by the control flow processor.

2. A computer according to claim 1 wherein only instructions relating to the control flow of the program are stored in the control flow memory.

3. A computer according to either one of claims 1 or 2 comprising means for loading a computation program into the instruction memory, and means for loading a control flow program into the control flow memory.

4. A computer according to any one of the preceding claims having means for communicating a datum value from the computation processor to the control flow processor and means for selecting a control flow instruction in accordance with said datum value.

5. A computer according to claim 4 wherein the means for communicating a datum value is such that the datum value passed from the computation processor to the control flow processor can take one of two possible values, and the control flow processor selects between a pair of control flow instructions accordingly.

6. A computer according to any one of the previous claims wherein instructions stored in the instruction memory are grouped into blocks; and incorporating an instruction moving means whereby instructions comprising a block are dispatched to the computation processor in a sequential manner, such a block having been selected by the control flow processor and identified to the instruction moving means by means of a start address and a block length or end address.

7. A computer according to claim 6 wherein the instruction moving means selects a block from a plurality of blocks in accordance with a datum value communicated from the computation processor, said plurality of blocks having been identified by the control flow processor.

8. A computer according to any one of the preceding claims which is a multiprocessor capable of operating in SIMD mode and comprising a plurality of processing elements acting as the computation processor and a controller incorporating a control flow processor.

9. A computer according to claim 8 which further includes a host computer linked to said controller by a host communication means linking said host and said controller whereby programs and data can be transferred between the host computer and the controller.

10. A method of operating a computer to carry out a computation in which changes in the control flow take place during the computation which computer comprises a first processor, a second processor, a first memory, and a second memory,
said method comprising the steps of (1) carrying out computation in said first processor in accordance with a sequence of instructions stored in said first memory, and (2) performing control flow by executing instructions in said second processor from said second memory.

11. A method of operating a computer according to claim 10 which comprises loading the first memory with a computation program, and loading the second memory with a control flow program and then

14

executing the computation program on the first processor and carrying out control flow in accordance with the control flow program executed on the second processor.

## FIG.1

## FIG.2

CONTROLLER

4

8 CONTROL FLOW PROCESSOR

9 CONTROL FLOW MEMORY

10

3

13

12

15

INSTRUCTION MOVING MEANS 11

INSTRUCTION MEMORY

14

18

BROADCASTING MEANS 16

5

7

17

VOTE SIGNAL

INSTRUCTION FETCH CONTROL

COMPUTATION INSTRUCTION BUS

# FIG.3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | THE 7th ANNUAL SYMPOSIUM ON COMPUTER ARCHITECTURE CONFERENCE PROCEEDINGS IEEE, 6th-8th May 1980, pages 168-173; Dr. K.E. BATCHER: "Architecture of a massively parallel processor" * Page 171, right-hand column, line 15 - page 172, right-hand column, line 29 * | 1-3 | G 06 F 15/06 |
| A | Idem | 4,6,8, 10,11 | |
| X | US-A-3 611 300 (ALDRICH) * Column 9, line 43 - column 11, line 3 * | 1,10 | |

TECHNICAL FIELDS SEARCHED (Int. Cl 4)

G 06 F 15/06
G 06 F 9/44

The present search report has been drawn up for all claims

| Place of search | Date of completion of the search | Examiner |
|---|---|---|
| THE HAGUE | 23-04-1987 | LEPEE W. |